# EUROPEAN PATENT SPECIFICATION

(11) **EP 3 537 045 B1**
(45) Date of publication and mention of the grant of the patent: **05.05.2021**
(21) Application number: 18160369.7
(22) Date of filing: 07.03.2018
(51) Int. Cl.: F23J 15/04, B01D 53/34, B01D 53/78, F23J 15/06

(54) **EXHAUST FUMES CONDITIONING METHOD AND INSTALLATION**
VERFAHREN UND ANLAGE ZUR KONDITIONIERUNG VON ABGASEN
PROCÉDÉ ET INSTALLATION DE CONDITIONNEMENT DE FUMÉES D'ÉCHAPPEMENT

(43) Date of publication of application: 11.09.2019
(73) Proprietor: GOOD SKY SRL, 70123 Bari (IT)
(72) Inventor: Licci, Dario, 70123 Bari (IT); Eberle, Giorgio, 70123 Bari (IT)
(74) Representative: Citron, Massimiliano

(56) References cited:
- EP-A1- 2 221 539
- WO-A1-87/03215
- WO-A1-2017/212387
- DE-A1- 3 737 500
- GB-A- 1 497 733
- GB-A- 2 494 668
- US-A- 3 786 767
- US-A- 5 671 687

## Description

The invention refers to a method and installation for conditioning exhaust fumes, in particular an installation for washing fumes by means of a tank.

Combustion and drying processes, especially in industrial complexes, are generally powered by fuels which while burning generate fumes expelled through chimneys or smokestacks. The combustions or the drying processes generate unpleasant odors, fine powders, and pollutants that are released into the environment along with high temperature fumes. Thus, not only the environment is polluted, but enormous quantities of caloric energy that disperse in the atmosphere are wasted with the fumes.

In any case, unpleasant odors, pollutants and powders can be treated effectively even in the case of non-hot emissions.

WO 2017/212387, GB 2 494 668 and DE 37 37 500 disclose plants for fume processing.

The main object of the invention is a method according to claim 1 and an installation according to claim 7 which improves this state of the art, in particular a method and an installation that allow both reducing odors, polluting particles, emissions of fine powders and pollutants.

The method comprises the phases of
pushing with a fall of liquid the fumes inside a tank filled with liquid, so that the liquid falls down (e.g. vertically) on the liquid contained in the tank and puts it under agitation (e.g. by entering deeply into it);
letting the fumes come out from the tank through an outlet separated from an entry point by a channel delimited by the (surface of the) liquid and by a ceiling wall of the tank.

The passage of the fumes inside the channel, wherein the liquid is agitated, allows effectively cleaning the fumes from odors, from polluting substances and powder. Preferably the channel is equipped with one or more nozzles or liquid sprayers to spray liquid towards the liquid contained in the tank. Such nozzles or sprayers, by keeping on pushing the fumes into the liquid contained in the tank, increase the cleaning effect on the fumes.

In a preferred variant, the liquid fall is formed for simplicity with liquid sprayed on the fumes while they are conveyed inside the tank.

In a preferred variant, the fumes entering the tank are sprayed, at an entry of the fumes inside the tank, with liquid directed towards the liquid in the tank, so that, preferably by entering in depth, the washing effect of the liquid increases.

In a preferred variant, the fumes transiting in the channel towards the outlet from the tank are sprayed with liquid directed towards the liquid in the tank.

In a preferred variant, the distance between the surface of the liquid and the ceiling of the tank is regulated by raising or lowering the ceiling with respect to the rest of the tank. Thus one can adjust the channel's cross-section and adapt the channel to the type and rate of the transiting fumes.

According to the invention, the distance between the surface of the liquid and a free end of an inlet conduit for the fumes inside the tank, is regulated, e.g. by vertically moving such conduit relative to the rest of the tank. Thus the vent opening for the fumes between the free end and the liquid can be adjusted, thereby adapting the washing stage to the type and flow rate of the transiting fumes. Also one can seek the condition in which for the fumes there is maximum immersion in the liquid while keeping proper transit speed.

In a preferred variant, the fumes are caused to enter and exit the tank N times, N>1, in said manner, in particular withdrawing the fumes from the tank and re-entering them in the tank at another point, so as to make them pass N transit channels, each channel being as defined above, thereby increasing the washing effect of the liquid.

The installation comprises:
a tank provided with a ceiling wall,
a fumes inlet conduit and a fumes outlet conduit, each having an opening in the ceiling wall;
a liquid sprayer placed inside the fumes inlet conduit for spraying on the fumes liquid directed towards the inside of the tank,
the tank being filled with liquid to form for the fumes a transit channel between the two openings, the channel being at the top delimited by the wall and at the bottom by the surface of the liquid.

The installation has the same advantages as the method.

In a variant, the liquid sprayer is placed at the outlet of the fumes inlet conduit, to better push the fumes into the tank's liquid.

In a variant, the installation comprises a liquid sprayer, mounted on the ceiling wall in the section joining the two outlets, to spray liquid towards the liquid contained in the tank (i.e. towards the tank's bottom).

In a variant, the ceiling wall of the tank is vertically movable relative to the rest of the tank, so as to be able to adjust the vertical cross-section of the transit channel.

According to the invention, the installation comprises means for varying the vertical position of a free end of the fumes inlet conduit inside the tank. Such a vertical position can then be adjusted for determining the distance between the liquid's surface and the free end, which distance corresponds to a vent opening for the fumes towards the channel.

Said means can e.g. comprise
a sleeve mounted coaxially and sliding on the inlet conduit, and/or
an inlet conduit with telescopic structure, and/or
a rotatable inlet conduit which has a thread engaged in a counterthread of a frame that supports it, so that a rotation of the conduit corresponds to a vertical linear displacement thereof.

In a variant, the installation comprises perforated panels placed horizontally inside the tank, where in use there is liquid, for dampening the liquid's motion, precipitating the powders towards the bottom of the tank and keeping them there.

In a variant, the installation comprises two substantially vertical ducts that open on the ceiling of the tank, one conduit being an inlet in the tank for the fumes and the other for exit therefrom. In particular the two conduits are integral with the ceiling and can move vertically together with the latter.

In a variant, the ceiling comprises N fume inlets and N fumes outlets, where N-1 inlets are one by one communicating with respective N-1 outlets in order to pass the fumes in N transit channels as defined above. In particular, there are vertical walls spaced apart from each other extending from the ceiling to the inside of the tank to delimit the side walls of the transit channels and isolate them from each other.

Preferably said liquid is water.

Further features and advantages of the invention will be more apparent from the description of an exemplary installation, illustrated in the attached drawings. wherein:
- fig. 1 shows a schematic side view of a washing stage according to the invention;
- fig. 2 shows a schematic plan view of a washing stage according to the invention;
- fig. 3 shows a schematic cross-sectioned side view according to the plane III-III of fig. 2;
- fig. 4 shows a schematic side view of an installation according to the invention;
- fig. 5 shows a schematic view from above of fig. 4;
- fig. 6 shows a schematic side cross-sectioned view according to plane VI-VI of fig. 5.

In the figures:
F indicates a path or flow of fumes;
H2O indicates a path or flow of water;
S indicates a level or surface of water.

In order not to crowd the figures some numbers are omitted, above all in presence of modular or repeated parts.

The plant and its components are described as in use, and to this case the interpretation of terms such as *upper, lower, up* or *down* should be referred to.

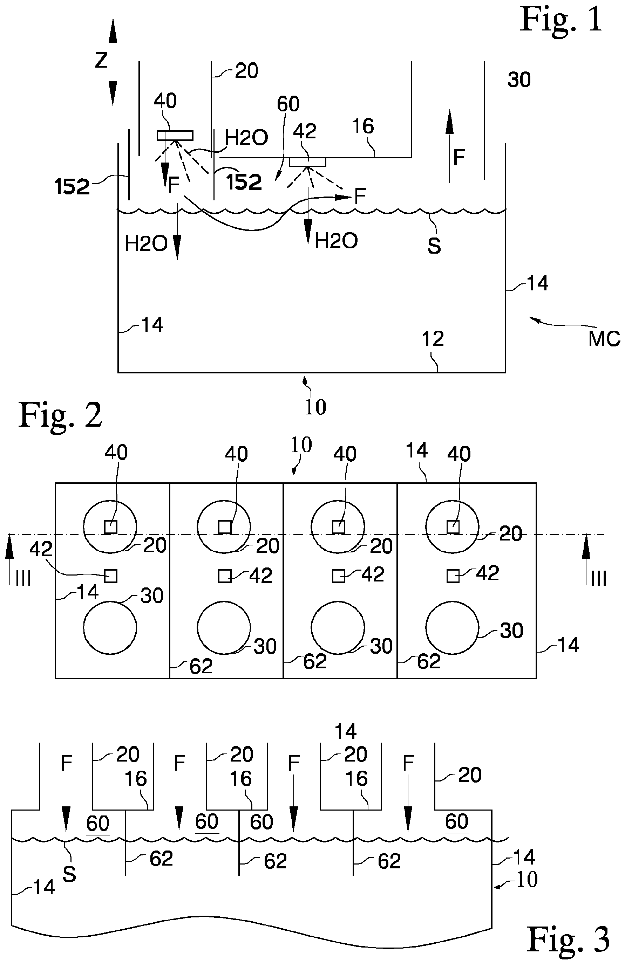

The plant MC of fig. 1 serves to eliminate odors, pollutants, capture dust, and recover thermal energy from hot fumes discharged from a combustion chamber, such as a boiler (not shown), which pours the fumes into a chimney to dispose of them.

The plant MC comprises a tank 10 having a bottom 12, side walls 14 and a ceiling 16. In use the tank 10 is full of water, whose free surface is indicated with S, and serves to wash the fumes F.

In the ceiling 16 a conduit 20 for the entry of fumes F and a conduit 30 for the outlet of the same fumes F, open. At the outlet of the conduit 20 there is a high pressure (e.g. 4 or more Atmospheres) water sprayer 40, able to spray water towards the surface S thereby hitting the fumes F arriving from the conduit 20. In the conduit 20 there are preferably other water sprinklers, to increase the amount of water that drags the fumes F towards the surface S, penetrating thereinto.

The outlets of the conduits 20, 30 are separated by a section of the ceiling 16 overhanging the surface S at a certain distance. The fumes F, to pass from the conduit 20 to the conduit 30, must exit the conduit 20 and run a channel 60 delimited superiorly by the ceiling 16 and inferiorly by the surface S.

The waterfall that falls from the duct 20 drags the fumes F with it and makes them sink into the water of the tank 10, where they release powders and unpleasant odors. Moreover, the same waterfall collides with the surface S and shakes violently the water in the tank 10, creating splashes, bubbles and waves downstream - and inside - the channel 60. The fumes F, upon continuing towards the conduit 30 along the channel 60, are then further hit by moving water, which improves the cleaning effect on fumes F.

Preferably, the cleaning effect on the fumes F is increased more by arranging along the channel 60 one or more water injectors 42 capable of spraying water towards the surface S to create water curtains or suspension that the fumes F must go through. The water curtains strip from the fumes F powders and caloric energy, then recovered from the heated water collected in the tank 10. Water falling from the injectors 42 helps to shake the water surface in the channel 60, creating water obstacles for the fumes F. The more obstacles to overcome for the fumes F, the greater the cleaning effect obtained.

Preferably the cross-section of the channel 60 is adjustable, so as to adapt the plant to the flow rate and/or pressure of the fumes F. Either the level of the surface S is changed, or the height of the assembly consisting of the ceiling 16 and the conduits 20, 30 is adjusted (see arrow Z), i.e. the distance of the assembly with respect to e.g. the bottom 12. The second solution is advantageous in cases where the level of the surface S is imposed by constructive constraints, e.g. a minimum level for covering heat exchangers placed inside the tank 10 or to guarantee the maintenance of several channels 60 in the same tank (see Fig. 2 and following description). The movement of the assembly along Z can be manual or controlled automatically by a computer by detecting the flow-rate or pressure of the fumes F.

Preferably also the opening through which the fumes F leave the conduit 20 is adjustable, so as to adapt the plant to the flow rate and/or pressure of the fumes F. In the example on top of the conduit 20 is mounted a sleeve 152, vertically movable (arrow Z) in adjustable fashion. By moving the sleeve 152 one varies the amount of free space between the lower end of the sleeve 152 and the surface of the liquid, such free space forming said opening. The movement of the sleeve 152 along Z too can be manual or controlled by a computer in automatic manner by detecting the flow rate or the pressure of the fumes F.

The assembly and the tank 10 are coupled in such a way as to prevent leakage of fumes F along the relatively sliding edges, e.g. through gaskets or mechanical precision.

Fig. 2 shows a preferred embodiment for the tank 10, which allows maximizing the washing efficiency, with the sinking of the fumes and the exploitation of water agitation contained therein.

The ceiling 16 of the tank 10 houses an array of N inlets 20 and N outlets 30 for conduits for the fumes F, N > 1. Inlets 20 and outlets 30 work in pairs as explained for fig. 1, and each output 30, except the last one, communicates with an inlet 20 (except the first one). The channel 60 of each pair is obtained over the surface S thanks to vertical bulkheads 62 which extend downwards from the ceiling 16. It is sufficient that the surface S is higher than the lower edge of the bulkheads 62 to confine the fumes F within N channels 60. For maximum separation the bulkheads 62 can also divide the tank 10 in N un-communicating sub-cells. In fig. 2 and 3 each pair of conduits 20, 30 can be vertically displaced independently from the other pairs, so as to independently control the section of every N-th channel 60.

Alternatively, N tanks can be used, such as the one in fig. 1 and connecting them in series, that is connecting their respective conduits 20, 30 in such a way that the fumes leaving one are the fumes entering another.

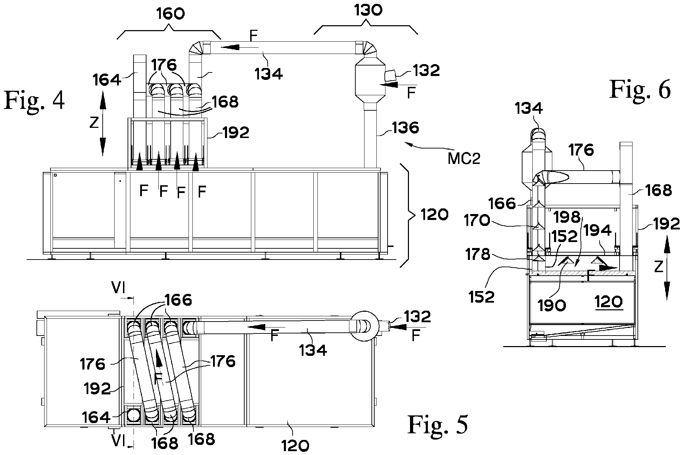

An overall plant MC2, which incorporates the concepts set out in figures 1-3, is shown in figures 4-6 and serves to clean the fumes and recover thermal energy from them. The hot fumes are e.g. discharged from a combustion chamber, such as a boiler (not shown).

The plant MC2 comprises at the lower part a tank 120 to collect and contain water heated by the fumes. In use, the tank 120 is almost full and/or there the water is kept at a constant level by a hydraulic circuit.

Above the tank 120, a first fumes interception and cleaning stage 130 and a second fumes interception and cleaning stage 160 are mounted. The stage 130 and the stage 160 are cascaded with each other, so that the fumes F coming out of the first stage 130 feed the input of the second stage 160, and after traveling into it they go forward to be expelled into the atmosphere.

Each stage 130, 160 comprise jets of water that by colliding with the fumes F deprive them of odors, heat and powders. The water heated and spoiled in the stages 130, 160 falls into the tank 120, where there is a heat exchanger (not shown), e.g. a serpentine, for recovering heat from the water.

The first stage 130 comprises in general (Figure 4):
an inlet (duct) 132 for the fumes F coming in e.g. from a chimney, or other source;
an outlet (conduit) 136 for the fumes F towards the tank 120,
a conduit 134 for the fumes F towards the second stage 160,
jets of water placed inside the vertical duct 136, which
   - form water curtains penetrated by the fumes F while the fumes travel to the second stage 160, and
   - fall into the tank 120, subtracting heat from the fumes.

Preferably there are water jets even inside the horizontal duct 134, which form water curtains penetrated by fumes F while traveling towards the second stage 160.

The second stage 160 (Figures 5 and 6) comprises in general:
an inlet (duct) 134 for the fumes F arriving from the first stage 130 and an outlet 164 for the fumes F, optionally equipped with an aspirator;
vertical ducts 166 to bring the fumes F inside the tank 120,
vertical ducts 168 for bringing the fumes F to the outside of the tank 120;
water jets 170 to create a waterfall inside the ducts 166 along a vertical descent direction of the fumes F.

The ducts 166, 168 are connected to each other by pipes 176, so that the fumes enter and exit N times from the tank 120.

The water sprayed by the jets 170 falling by gravity not only washes the fumes F but pushes them towards the bottom of the ducts 166. The waterfall formed by the jets 170 quickly enters the tank 120 and here collides with the surface of the water contained in the tank 120, causing a mixture of fumes and water.

At the bottom of the sections 168 there is another sprayer 178, highly pressurized, in order to increase the immersion of the fumes F inside the water basin of the tank 120 and to accentuate the bubbling of the basin.

By construction, the plant MC2 comprises, between the duct 166 and the duct 168, a channel 198 defined at the top by the ceiling 194 and at the bottom by the surface of the water basin. In the channel 168, the fumes are effectively washed.

The ducts 166, 168 are integral with a supporting frame 192, which rests on a ceiling 194 of the tank 120 and is vertically movable in a controlled manner (arrow Z) with respect to the tank 120. The aim is to change the cross-section of the channel 198 to adapt it to the flow rate of the fumes.

Inside the tank 120, near or connected to the ceiling 192, there are one or more water sprayers 190, with the function of spraying water towards the bottom of the tank 120 and hit the fumes F in transit from a duct 166 to duct 168 along a channel 198 defined at the top by the ceiling 194 and at the bottom by the surface of the water basin.

Fig. 6 shows a vertically movable sleeve 152 (arrow Z) used for throttling more or less the exit of the fumes F from the duct 166. As mentioned, a means for throttling more or less the outlet of the fumes F from the tank's inlet duct can replace or cooperate with a movable ceiling.

There is a functional correspondence between the elements of Figures 1-3 with those of figures 4-6:
tank 120 ←→ tank 10;
vertical ducts 166 ←→ conduit 20;
vertical conduits 168 ←→ conduit 30;
ceiling 194 ←→ ceiling 16;
water sprayers 190 ←→ water injectors 42;
channel 60 ←→ channel 198;
sleeve 152 ←→ sleeve 152.

Thus, with the same principle already described in figs. 1-3, the fumes arrive each time from a duct 166, they cross a stormy channel 198, and they come out through the duct 168. Thanks to the pipes 176, the cleaning process for the fumes inside the tank 120 is repeated several times.

The ducts 166, 168 are integral with a supporting frame 192, which rests on a ceiling 194 of the tank 120 and is vertically movable in a controlled manner (arrow Z) with respect to the tank 120. The aim is to change the cross-section of the channel 198 to adapt it to the flow rate of the fumes.

Inside the tank 120, near or connected to the ceiling 192, there are one or more water sprayers 190, with the function of spraying water towards the bottom of the tank 120 and hit the fumes F in transit from a duct 166 to duct 168 along a channel 198 defined at the top by the ceiling 194 and at the bottom by the surface of the water basin.

Fig. 6 shows a vertically movable sleeve 152 (arrow Z) used for throttling more or less the exit of the fumes F from the duct 166. As mentioned, a means for throttling more or less the outlet of the fumes F from the tank's inlet duct can replace or cooperate with a movable ceiling.

There is a functional correspondence between the elements of Figures 1-3 with those of figures 4-6:
tank 120 ←→ tank 10;
vertical ducts 166 ←→ conduit 20;
vertical conduits 168 ←→ conduit 30;
ceiling 194 ←→ ceiling 16;
water sprayers 190 ←→ water injectors 42;
channel 60 ←→ channel 198;
sleeve 152 ←→ sleeve 152.

Thus, with the same principle already described in figs. 1-3, the fumes arrive each time from a duct 166, they cross a stormy channel 198, and they come out through the duct 168. Thanks to the pipes 176, the cleaning process for the fumes inside the tank 120 is repeated several times.

## Claims

1. Method for reducing odors and polluting particles from fumes, comprising the steps of
pushing with a fall of liquid the fumes (F) inside a tank (10) filled with liquid, so that the liquid falls down on the liquid contained in the tank and puts it under agitation;
letting the fumes (F) come out from the tank (10) through an outlet (30) separated from an entry point (20) by a channel (60) delimited by the liquid in the tank and by a ceiling wall (16) of the tank,
**characterized in that**
the distance between the surface of the liquid in the tank and a free end of an inlet conduit for the fumes inside the tank, is regulated.

2. Method according to claim 1, wherein the liquid fall is formed with liquid sprayed on the fumes while they are conveyed inside the tank.

3. Method according to claim 1 or 2, wherein the fumes entering the tank are sprayed, at an entry of the fumes inside the tank, with liquid directed towards the liquid in the tank.

4. Method according to any one of the preceding claims, wherein the fumes transiting in the channel towards the outlet from the tank are sprayed with liquid directed towards the liquid in the tank.

5. Method according to any one of the preceding claims, wherein the distance between the surface of the liquid and the ceiling of the tank is regulated by raising or lowering the ceiling with respect to the rest of the tank, thereby adjusting the channel's cross-section.

6. Method according to any one of the preceding claims, wherein the fumes are caused to enter and exit the tank N times, N > 1, withdrawing the fumes from the tank and re-entering them in the tank at another point, so as to make them pass N transit channels, each channel being as defined in claim 1.

7. Installation (MC) for reducing odors and polluting particles from fumes, comprising:
a tank (10) provided with a ceiling wall (16),
a fumes inlet conduit (20) and a fumes outlet conduit (30) each having an opening in the ceiling wall;
a liquid sprayer (40) placed inside the fumes inlet conduit configured for spraying on the fumes liquid directed towards the inside of the tank,
the tank being configured to be filled with liquid to form for the fumes a transit channel (60) between the two openings, the channel being at the top delimited by the ceiling wall and at the bottom by the surface of the liquid in the tank,
**characterized by**
comprising means for varying the vertical position of a free end of the fumes inlet conduit inside the tank.

8. Installation (MC) according to claim 7, wherein the channel is provided with one or more liquid sprayers (42) for spraying liquid towards the liquid contained in the tank.

9. Installation (MC) according to claim 8 or 7, wherein the ceiling wall (16) is vertically movable relative to the rest of the tank (10), so as to be able to adjust the vertical cross-section of the transit channel (60).

10. Installation (MC) according to claim 9, wherein said means comprise a sleeve mounted coaxially and sliding on the inlet conduit.

11. Installation (MC) according to any one of the previous claims 7 to 10, comprising two substantially vertical ducts which open onto the ceiling of the tank, one conduit being an inlet for the fumes in the tank and the other being the exit thereof, the two conduits being integral with the ceiling and capable of moving vertically together with the latter.

## Patentansprüche

1. Verfahren zur Reduzierung von Gerüchen und partikelförmigen Verunreinigungen aus Dampf, umfassend die Schritte von
Schieben die Dämpfe (F) in einen mit Flüssigkeit gefüllten Tank (10), so dass die Flüssigkeit auf die im Tank enthaltene Flüssigkeit fällt und diese umrührt;
Absaugen der Dämpfe (F) aus dem Tank (10) durch einen Auslass (30), der von einer Einlassstelle (20) durch einen Kanal (60) getrennt ist, der von der Flüssigkeit im Tank und einer Deckenwand (16) des Tanks begrenzt wird,
**dadurch gekennzeichnet dass**
der Abstand zwischen der Flüssigkeitsoberfläche und einem freien Ende eines Raucheinlasskanals im Inneren des Tanks eingestellt wird.

2. Verfahren nach Anspruch 1, wobei der Wasserfall mit Flüssigkeit gebildet wird, die auf die Dämpfe gesprüht wird, während sie in den Tank geleitet werden.

3. Verfahren nach Anspruch 1 oder 2, wobei beim Eintritt der Dämpfe in den Tank eine auf die Flüssigkeit im Tank gerichtete Flüssigkeit an einem Auslass der Dämpfe im Tank versprüht wird.

4. Verfahren nach einem der vorhergehenden Ansprüche, bei dem auf die Flüssigkeit im Tank gerichtete Flüssigkeit auf die durch den Kanal zum Ausgang des Tanks strömenden Dämpfe gesprüht wird.

5. Verfahren nach einem der vorhergehenden Ansprüche, wobei der Abstand zwischen der Flüssigkeitsoberfläche und der Oberseite des Tanks durch Anheben oder Absenken der Oberseite relativ zum Rest des Tanks eingestellt wird, wodurch der Kanalquerschnitt eingestellt wird.

6. Verfahren nach einem der vorhergehenden Ansprüche, wobei die Dämpfe veranlasst werden, N-mal, N > 1, in den Tank ein- und auszutreten, indem die aus dem Tank austretenden Dämpfe an einer anderen Stelle wieder in den Tank eintreten, um sie in N Durchgangskanäle zu leiten, wobei jeder Kanal wie in Anspruch 1 definiert ist.

7. Die Anlage (MC) zur Reduzierung von Geruchs- und Partikelschadstoffen aus Dämpfe, umfassend:
ein Becken (10), das mit einer Himmelswand (16) versehen ist,
einen Abgaseintrittskanal (20) und einen Dampfaustrittskanal (30), die jeweils einen Austritt in der Deckenwand haben;
einem Flüssigkeitszerstäuber (40), der im Dampfeinlasskanal platziert ist, um die zum Inneren des Tanks gerichtete Dampfflüssigkeit aufzusprühen,
wobei der Tank so konfiguriert ist, dass er mit Flüssigkeit gefüllt wird, um für die Dämpfe einen Durchgangskanal (60) zwischen den beiden Auslässen zu bilden, wobei der Kanal oben durch die Wand und unten durch die Flüssigkeitsoberfläche begrenzt ist,
**dadurch gekennzeichnet, dass**
Mittel zur Veränderung der vertikalen Position eines freien Endes des Einlasskanals für Dämpfe in den Tank umfasst.

8. Anlage (MC) nach Anspruch 7, wobei der Kanal mit einem oder mehreren Flüssigkeitssprühern (42) zum Versprühen von Flüssigkeit in Richtung der im Tank enthaltenen Flüssigkeit versehen ist.

9. Anlage (MC) nach Anspruch 8 oder 7, wobei die Oberseite (16) des Tanks in Bezug auf den Rest des Tanks (10) vertikal beweglich ist, so dass der vertikale Abschnitt des Transitkanals (60) eingestellt werden kann.

10. Anlage (MC) nach Anspruch 9, wobei das Mittel eine Hülse umfasst, die koaxial auf der Einlassleitung montiert und verschiebbar ist.

11. Anlage (MC) nach einem der vorhergehenden Ansprüche 7 bis 10, umfassend zwei im wesentlichen vertikale Leitungen, die auf die Oberseite des Tanks münden, wobei eine Leitung eine Einlaßleitung für Dämpfe in den Tank und die andere eine Auslaßleitung ist, wobei die beiden Leitungen mit der Oberseite einstückig sind und sich zusammen mit dieser vertikal bewegen können.

## Revendications

1. Procédé de réduction des odeurs et des polluants particulaires de la fumée, comprenant les étapes suivantes
pousser les fumées (F) dans un réservoir (10) rempli de liquide, de sorte que le liquide tombe sur le liquide contenu dans le réservoir et l'agite;
évacuer les fumées (F) du réservoir (10) par une sortie (30) séparée d'un point d'entrée (20) par un canal (60) délimité par le liquide dans le réservoir et une paroi de plafond (16) du réservoir,
**caractérisé par le fait que**
la distance entre la surface du liquide et une extrémité libre d'un conduit d'entrée de fumée à l'intérieur du réservoir est régulé.

2. Méthode selon la revendication 1, dans laquelle la chute d'eau est formée avec un liquide pulvérisé sur les fumées lorsqu'elles sont conduites dans le réservoir.

3. Procédé selon la revendication 1 ou 2, dans lequel, sur les fumées entrant dans la cuve, un liquide dirigé vers le liquide dans la cuve est pulvérisé à une sortie des fumées à l'intérieur de la cuve.

4. Méthode selon toute revendication précédente, dans laquelle le liquide dirigé vers le liquide dans le réservoir est pulvérisé sur les fumées passant par le canal vers la sortie du réservoir.

5. Méthode selon l'une des revendications précédentes, dans laquelle la distance entre la surface du liquide et le haut de la cuve est ajustée en élevant ou en abaissant le haut par rapport au reste de la cuve, ce qui permet d'ajuster la section du canal.

6. Procédé selon l'une quelconque des revendications précédentes, dans lequel les fumées sont amenées à entrer et à sortir du réservoir N fois, N >1, en prenant les fumées sortant du réservoir et rentrant dans le réservoir en un autre point, de manière à les faire passer dans N canaux de transit, chaque canal étant défini comme dans la revendication 1.

7. L'installation (MC) pour réduire les odeurs et les particules polluantes des fumées, comprenant:
un bassin (10) muni d'un mur du ciel (16),
un conduit d'entrée des gaz de combustion (20) et un conduit de sortie des gaz de combustion (30) qui ont chacun une sortie dans le mur du plafond ;
un pulvérisateur de liquide (40) placé à l'intérieur du conduit d'entrée de la fumée pour pulvériser le liquide de fumée dirigé vers l'intérieur du réservoir,
le réservoir étant configuré pour être rempli de liquide afin de former pour les fumées un canal de transit (60) entre les deux sorties, le canal étant délimité en haut par la paroi et
en bas par la surface du liquide,
**caractérisé par le fait que**
comprennent des moyens permettant de faire varier la position verticale d'une extrémité libre du conduit d'entrée de la fumée dans le réservoir.

8. Installation (MC) selon la revendication 7, dans laquelle le canal est pourvu d'un ou plusieurs pulvérisateurs de liquide (42) pour pulvériser le 15 liquide vers le liquide contenu dans le réservoir.

9. Installation (MC) selon la revendication 8 ou 7, dans laquelle le sommet (16) de la cuve est mobile verticalement par rapport au reste de la cuve (10), de sorte que la section verticale du canal de transit (60) peut être ajustée.

10. Installation (MC) selon la revendication 9, dans laquelle ledit moyen comprend un manchon monté coaxialement et coulissant sur le conduit d'entrée.

11. Installation (MC) selon l'une des revendications précédentes 7 à 10, comprenant deux conduits sensiblement verticaux se déversant sur le dessus de la cuve, un conduit étant un conduit d'entrée pour les fumées dans la cuve et l'autre un conduit de sortie, les deux conduits étant d'un seul tenant avec le dessus et pouvant se déplacer verticalement avec celui-ci.
